## Europäisches Patentamt
## European Patent Office
## Office européen des brevets

(19)

(11) Numéro de publication: **0 077 693**
**B1**

(12)

# FASCICULE DE BREVET EUROPEEN

(45) Date de publication du fascicule du brevet: **20.05.87**

(51) Int. Cl.⁴: **G 11 B 11/10**

(21) Numéro de dépôt: **82400594.6**

(22) Date de dépôt: **31.03.82**

(54) **Dispositif opto-électronique de lecture d'informations contenues sur un support magnétique.**

(30) Priorité: **16.10.81 FR 8119543**

(43) Date de publication de la demande:
**27.04.83 Bulletin 83/17**

(45) Mention de la délivrance du brevet:
**20.05.87 Bulletin 87/21**

(84) Etats contractants désignés:
**DE GB IT NL SE**

(56) Documents cités:
**EP-A-0 018 211**
**BE-A- 831 264**
**DE-A-2 033 557**
**DE-A-2 108 837**
**FR-A-2 119 336**
**FR-A-2 188 231**
**FR-A-2 260 833**
**US-A-3 158 846**
**US-A-3 662 364**
**US-A-3 716 847**
**US-A-3 737 236**
**US-A-3 769 465**
**US-A-3 801 824**

(73) Titulaire: **BULL S.A.**
**121, Avenue de Malakoff**
**F-75016 Paris (FR)**

(72) Inventeur: **Lazzari, Jean-Pierre**
**29 Rue André Thomas**
**F-78490 Montfort L'Amaury (FR)**

(74) Mandataire: **Gouesmel, Daniel et al**
**BULL S.A. Division de la Propriété Industrielle**
**25, avenue de la Grande-Armée**
**F-75016 Paris (FR)**

(56) Documents cités:
**IBM TECHNICAL DISCLOSURE BULLETIN, vol. 16, no. 7, décembre 1973, ARMONK, N.Y. (US). H. WIEDER: "Lensless beam-addressable memory using room temperature lasers", pages 2372-2373**

**IBM TECHNICAL DISCLOSURE BULLETIN, vol. 10, no. 11, avril 1968, ARMONK, N.Y. (US). B. R. BROWN et al.: "Magnetic recording and optical readout system", page 1750**

**IBM TECHNICAL DISCLOSURE BULLETIN, vol. 14, no. 2, juillet 1971, ARMONK, N.Y. (US). R. F. M. THORNLEY: "Recorded signal enhancing apparatus", pages 619-620**

## Description

La présente invention concerne un dispositif opto-électronique de lecture d'informations contenues sur un support magnétique. Elle est notamment applicable aux mémoires magnéto-optiques utilisées principalement dans les systèmes de traitement de l'information.

On sait que les systèmes de traitement de l'information comprennent essentiellement une unité centrale de traitement de l'information et une pluralité d'organes d'entrée/sortie des informations, encore appelées "systèmes périphériques". Ces systèmes permettent d'introduire les données dans l'unité centrale, où celles-ci sont traitées par dés unités arithmétiques et logiques, puis renvoyées après ce traitement, dans les organes de sortie. Le résultat des opérations effectuées par l'unité centrale est alors soit utilisé et analysé immédiatement par l'utilisateur du système de traitement de l'information, soit emmagasiné, pour des périodes de temps variables, dans des mémoires, plus souvent appelées "mémoire de masse".

Les mémoires de masse les plus fréquemment utilisées sont de deux types:

— les mémoires à disques magnétiques,
— les dérouleurs de bandes.

Dans les mémoires à disques magnétiques, les informations sont portées par des disques magnétiques, et sont contenues à l'intérieur de pistes d'enregistrement concentriques circulaires qui ont une largeur radiale de l'ordre de quelques dizaines de microns, et qui couvrent généralement la majeure partie de leurs deux faces.

Dans les déroulers de bandes magnétiques, les informations sont portées par des bandes magnétiques et contenues à l'intérieure de pistes parallèles à la longueur de la bande.

Généralement, und suite d'informations magnétiques enregistrées sur une piste d'un disque ou d'une bande magnétiques, se présente sous la forme d'une succession de petits domaines magnétiques appelés "domaines élémentaires" répartis sur toute la longueur de la piste et ayant des inductions magnétiques de même module et de sens opposé.

Les moyens qui permettent, soit d'enregistrer les informations sur les disques ou bandes, soit de les lire, soit enfin de réaliser l'une et l'autre de ces deux fonctions, sont appelés dispositifs de transduction ou pour simplifier transducteurs. Généralement, on associe à un support d'enregistrement donné (disque ou bande) un ou plusieurs transducteurs, le support défilant devant celui-ci ou ceux-ci.

Il existe deux type principaux de mémoires à disques magnétiques.

Ce sont:

— a) les mémoires à disques que l'on appelera "mémoires à disques classiques" où la lecture et l'écriture sont effectuées par des transducteurs magnétiques généralement composés d'un circuit magnétique autour duquel est disposé un enroulement et qui comporte un entrefer. La variation de l'induction à l'intérieur de l'entrefer d'un tel transducteur permet la lecture et/ou l'enregistrement des informations contenus sur le support associé à ce transducteur.

On définit la densité longitudinale (ou encore densité linéaire) comme le nombre d'informations par unité de longueur mesurée suivant la circonférence d'une piste, s'il s'agit d'un disque magnétique ou suivant la longueur de la bande s'il s'agit d'une bande magnétique.

On appelle densité radiale (pour un disque magnétique), le nombre de pistes par unité de longueur mesurée suivant le diamètre du disque.

On rappelle que l'on désigne sous le vocable anglo-saxon "BIT" à la fois l'unité d'information binaires égale à 1 ou 0 et toute matérialisation de cette information, qui peut être par exemple un domaine magnétique élémentaire contenu sur une piste d'un disque magnétique ou encore un signal électrique analogique ou logique.

Dans les mémoires à disques classiques, les densités radiales actuellement atteintes sont de l'ordre de 350 à 400 pistes par centimètre (soit 850 à 1000 pistes par pouce: on dit encore 850 à 1000 TPI), alors que les densités linéiques sont de l'ordre de 2000 bits par centimètre ou encore 5000 bits par pouce (on dit encore 5000 bpi).

— b) les mémoires magnéto-optiques où l'écriture est effectuées par des moyens en grande partie magnétiques, alors que la lecture est effectuée par un dispositif opto-électronique comprenant un ensemble de moyens optiques et des transducteurs photo-électriques transformant la lumière qu'ils reçoivent en un signal électrique. En d'autres termes, les mémoires magnéto-optiques sont des mémoires où les informations sont portées par des disques magnétiques, et lues par des dispositifs opto-électroniques. Les densités radiales et longitudinales obtenues sont de l'ordre respectivement de 25 000 TPI et 25 000 bpi. Ainsi les dimensions des domains magnétiques élémentaires sont de l'ordre de 1 à 2 microns, et la largeur des pistes est du même ordre de grandeur.

Dans les mémoires magnéto-optiques, il existe deux modes principaux d'écriture des informations, à savoir un mode d'écriture dit "thermo-magnétique", et un mode d'écriture purement magnétique au moyen de transducteurs magnétiques pouvant être du type de ceux décrits plus haut.

Le principe du mode d'écriture thermo-magnétique consiste à utiliser l'effet thermique dû à l'impact d'un faisceau de rayonnement électromagnétique laser sur le materiau magnétique constituant la surface d'enregistrement du disque magnétique. On rappelle que le rayonnement laser est un rayonnement électro-magnétique mono-chromatique cohérent.

On rappelle qu'un rayonnement électro-magnétique (on dit encore par extension une lumière) est polarisé de façon rectiligne dans le plan, lorsque le vecteur champ électrique (et par suite le vecteur induction magnétique) conserve toujours la même direction dans le plan perpendiculaire à la direction de propagation du rayonnement, et ce quelle que soit la position de ce plan dans l'espace, et quelque soit l'instant d'observation. On définit le plan de polarisation comme le plan contenant la direction de propagation de la lumière et le vecteur champ électrique.

On dit que le rayonnement électro-magnétique est coherent lorsque, par exemple, dans le cas d'une lumière polarisée rectiligne dans le plan, la phase du champ électrique et par suite du champ d'induction magnétique, est identique en tout point d'un même plan perpendiculaire à la direction de propagation.

Pour écrire un bit sur un disque magnétique, par le mode d'écriture thermo-magnétique, on envoie un faisceau laser focalisé ayant des dimensions de l'ordre de grandeur de celles du bit que l'on veut écrire, à savoir un ou deux microns. On suppose que la magnétisation initiale de la couche magnétique constituant les disques magnétiques est uniforme c'est-à-dire en tout point, l'induction magnétique a même direction et même module. A l'endroit où le faisceau laser frappe la surface du disque magnétique, celle-ci subit un échauffement telle que la température de la couche magnétique en cet endroit devient bien supérieure à la température de Curi $T_c$ du matériau magnétique, température à partir de laquelle ce dernier perd son aimantation. Si l'on soumet alors cet endroit à un champ magnétique dont la direction est opposée à l'aimantation dans la couche magnétique, lors du refroidissement du matériau magnétique (le faisceau laser étant alors supprimé), le matériau magnétique prendra alors une aimantation de sens opposé à l'aimantation uniforme du reste de la couche magnétique du disque magnétique.

Dans les mémoires magnéto-optiques, le mode de lecture des informations repose sur le principe d'interaction d'une lumière polarisée avec l'état magnétique de la couche constituant le disque magnétique, inter action qui a pour conséquence la rotation du vecteur champ électrique dans la plan perpendiculaire à la direction de propagation (et par suite du champ magnétique du rayonnement électro-magnétique constituant la lumière polarisée). A cet effet on envoie un faisceau de lumière polarisé rectiligne de préférence mono-chromatique (cette lumière polarisée est par exemple celle d'un laser), faisceau que l'on focalise de façon que ses dimensions soient de l'ordre de celles des domaines magnétiques constituant les informations du disque magnétique. Si l'on suppose le milieu magnétique telle que son aimantation soit normale à la surface de la couche, aimantation dite perpendiculaire, (on pourrait également utiliser un milieu magnétique dont l'aimantation est longitudinale, c'est-à-dire parallèle à la couche elle-même), on observe qu'après réflexion du faisceau incident sur cette couche, le vecteur champ électrique de la lumière polarisée subit une rotation, dans le plan normal à la direction de propagation de la lumière, qu'on dit par convention, égale à un angle $(-\theta)$, lorsque le faisceau lumineux rencontre un domaine d'aimantation négative et égale à $(+\theta)$, lorsque le faisceau lumineu rencontre un domaine d'aimantation positive. Le phénomène physique qui vient d'être décrit (inter-action de la lumière avec l'état magnétique du matériau qui a pour conséquence une rotation du vecteur champ et du vecteur champ électrique) est appelé "effet Kerr". (L'effet Kerr est dit perpendiculaire si l'aimantation de la couche magnétique est perpendiculaire, et est dit longitudinal si l'aimantation de la couche est longitudinale).

On voit que pour déterminer la valeur d'un bit, il suffit de détecter la rotation du vecteur champ électrique. Ceci est effectué au moyen d'un appareil appelé analyseur constitué d'un cristal privilégiant une direction de propagation de la lumière, que l'on dispose de façon que cette direction soit à 90° de la direction qu'occupe le vecteur champ électrique de la lumière réfléchie lorsque celle-ci s'est réfléchie sur un domaine magnétique d'aimantation négative. Dans ces conditions, on recueille à la sortie de l'analyseur une lumière d'intensité nulle. Lorsque la lumière se réfléchit sur un domaine magnétique d'aimantation positive, on voit par contre à la sortie de l'analyseur, une lumière d'intensité non nulle. En d'autres termes, les domains d'aimantation négative apparaîtront en noir sur un écran placé à la sortie de l'analyseur, alors que les domaines d'aimantation positive apparaîtront en clair.

Il est évident, que si l'on place des transducteurs photoélectriques (photo-diodes au silicium par exemple), à la sortie de l'analyseur, le signal délivré par le transducteur photo-électrique aura une tension (ou un courant nul) lorsque l'on aura affaire à un domaine d'aimantation négative et aura une tension non nulle, lorsque l'on aura affaire à un domaine d'aimantation positive.

Des dispositifs opto-électroniques de lecture d'informations magnétiques mettant en oeuvre les principes énoncés ci-dessus, sont désormais connus. L'un de ceux-ci est par exemple décrit dans l'article de NOBUTAKE IMAHURA et CHUICHI OTA sout la titre: "Experimental study on magneto-optical disc exerciser with the laser diode and amorphous magnetic thin films", publié dans la revue "Japanese journal of applied physics", volume 19 N° 12, Décembre 1980 pp L 731 à 734.

Ce dispositif opto-électronique comprend:

— un émetteur de rayonnement laser polarisé,
— un élément séparateur d'un faisceau incident et d'un faisceau réfléchi,
— un dispositif de focalisation du faisceau laser sur la surface du disque magnétique dont on cherche à lire les informations;
— un analyseur de lumière,
— un transducteur photo-électrique.

Le faisceau laser polarisé est envoyé par émetteur laser à travers l'élément séparateur et le dispositif de focalisation sur la surface du disque, de telle sorte qu'il soit normal à celle-ci et que ses dimensions soient de l'ordre de grandeur de celles des domaines magnétiques. Après réflexion sur la surface du disque, le faisceau laser réfléchi est envoyé à l'analyseur de lumière par l'intermédiaire de l'élément séparateur. Il est ensuite recueilli à la sortie de l'analyseur par le transducteur photo-électrique.

Le dispositif de focalisation du faisceau sur la surface du disque est asservi de telle sorte que, quellequesoit les oscillations de la surface du disque (la surface d'un disque n'est jamais plane et le disque présente toujours un certain fauxrond en rotation) le faisceau laser soit toujours focalisé avec précision sur la surface du disque.

De plus, dès que le choix de la piste à lire est effectué et que le dispositf de lecture se trouve disposé en regard de la piste choisie, il convient que le faisceau laser de lecture reste parfaitement centré sur le domaine magnétique de la piste qui représente l'information que l'on cherche à lire. A cet effet, le faisceau laser est divisé en trois faisceaux d'observation, dont le faisceau central sert à la lecture de l'information et dont les deux faisceaux d'observation latéraux situés de part et d'autre de la piste servent au centrage du dispositif en regard de la piste que l'on cherche à lire.

Le dispositif de lecture décrit rapidement cidessus s'il permet la lecture de disque magnétiques comportant un très grand nombre d'information (rappelons que les densités de tels disques utilisés dans les mémoires magnéto-optiques comportent entre 100 et 200 fois plus d'informations par unité de surface que les disques magnétiques utilisés dans les mémoires à disques classiques, a l'inconvénient d'être volumineux, comporte des dispositifs de focalisation et de centrage extrêmement précis et dont coûteux et a un signal de lecture tel que le rapport signal/bruit à la sortie du transducteur photo-électrique est limité. C'est la raison pour laquelle actuellement, les mémoires magnéto-optiques sont relativement peu utilisées par rapport aux mémoires à disques magnétiques classiques.

On connait également d'autres dispositifs optoélectroniques de lecture d'informations magnétiques. Ceux-ci sont décrits par exemple dans le brevet US 3716847.

Un tel dispositif comprend des moyens permettant d'éclairer une pluralité de domaines magnétiques enregistrés sur la surface d'un disque magnétique par le moyen d'un distributeur par exemple un oeil de mouch et des moyens de projection de l'image de la surface du support éclairé par les moyens d'éclairage, ainsi qu'un analyseur de lumière et des transducteurs photoélectriques. Dans ce dispositif, on envoie donc des faisceau de lumière polarisé sur la surface du disque par l'intermédiaire des moyens d'éclairage et après réflexion sur la surface du disque, les faisceaux de lumière polarisé réfléchi passent à travers les moyens de projection pour être recueillis à la sortie de l'analyseur par les transducteurs photo-électriques.

Dans le dispositif opto-électronique décrit dans le brevet US précité, les moyens de projection ne permettent pas d'agrandir l'image des domaines magnètiques observée sur la surface du disque. Par ailleurs, les moyens d'éclairage ne permettent pas de concentrer la lumière sur la zone éclairée avec une intensité suffisante permettant d'avoir une résolution optique importante permettant de distinguer suffisamment chacun des domaines magnétiques vis-à-vis des autres. De la sorte, la densité d'informations enregistrées sur le disque magnétique observées par le dispositif opto-électronique de lecture décrit dans le brevet US précité est relativement faible, en tout cas beaucoup plus faible que les densités radiales et longitudinales citées plus haut, à savoir 25000 TPI et 25000 bpi. En effet, pour que les transducteurs photo-électroniques puissent délivrer un signal d'amplitude suffisante, il faut que la tache observée correspondant à l'image de chaque domaine magnétique, soit d'une grandeur suffisante, de l'ordre de la taille des détecteurs eux-mêmes. Dans le dispositif photo-électronique de lecture du brevet US précité, cela signifie que la taille des domaines est suffissamment grande pour être observée par un détecteur et que par conséquent la densité d'informations sur le support est très faible (puisqu'il n'y a pas d'agrandissement de l'image).

La présente invention permet de remédier à ces inconvénients. Dans celle-ci, les moyens optiques d'éclairage permettent de concentrer la lumière sur une zone du support de diamètre déterminé puis de recevoir le faisceau réfléchi avant de le transmettre à des moyens de projection, l'ensemble optique constitué par les moyens optiques d'éclairage et les moyens de projection permettant d'agrandir l'image observée à travers les moyens optiques d'éclairage. Ces moyens optiques d'éclairage sont constitués par un objectif de grossissement.

On peut ainsi utiliser une lumière normale relativement monochromatique, une optique de grossissement extrêmement simple et on améliore considérablement le rapport signal/bruit.

Selon l'invention, le dispositif de lecture optoélectronique d'informations contenues sur un support magnétique à l'intérieur d'une pluralité de pistes, comprenant:

— une source émettant un faisceau de lumière polarisé sur la surface du support en un endroit déterminé de celui-ci, dont l'interaction avec l'état magnétique du support en cet endroit produit une rotation du plan de polarisation de la lumière,
— des moyens optiques permettant d'éclairer simultanément une zone comprenant une pluralité de pistes et une pluralité d'informations sur chaque piste,

— des moyens de projection de l'image de la surface du support éclairée par lesdits moyens optiques, sur un plan où sont disposés des transducteurs photoélectriques,

— des moyens de détection de l'angle de rotation du plan de polarisation de la lumière comprenant un analyseur de lumière et des transducteurs photoélectriques délivrant un signal électrique dont la tension/ou courant est fonction de la valeur de l'information situées á cet endroit,

— est caractérisé en ce que les moyens optiques sont représentés par un objectif permettant d'émettre un seul faisceau de lumière incident sur ladite zone du support de largeur déterminée, de récupérer le faisceau de lumière réfléchi avant de le transmettre aux moyens de projection et d'agrandir l'image des domaines magnétiques observés.

D'autres caractéristiques et avantages de la présente invention apparaîtront dans la description suivante donnée à titre d'exemple non limitatif et en se référant aux figures annexées.

Sur ces dessins:

— la figure 1: composée des figures 1a, 1b, 1c illustre le principe de la lecture optique d'informations contenues sur un support magnétique.

— la figure 2: montre un dispositif opto-électronique de lecture d'informations contenues sur un support magnétique selon l'art antérieur;

— les figures 3 et 4: sont des représentations schématiques d'un ensemble de domaines magnétiques écrits sur des disques magnétiques que l'on cherche à lire par un dispositif tel que celui représenté à la figure 2;

— la figure 5: est un schéma de principe du dispositif photo-électronique de lecture d'informations contenues sur un support magnétique selon l'invention;

— la figure 6: montre l'image de la surface du support magnétique observée par l'objectif de grossissement du dispositif photo-électronique selon l'invention, image telle qu'elle est projetée sur le plan P où sont disposés les transducteurs photo-électriques de lecture et d'informations contenues, sur le support;

— la figure 7: est un exemple de réalisation préféré du dispositif photo-électronique de lecture d'informations contenues su run support magnétique selon l'invention, dispositif placé sur une plate-forme portant un corps principal contenan tun transducteur d'écriture des informations contenues sur le support magnétique;

— la figure 8: montre comment sont disposés relativement l'un par rapport à l'autre l'objectif de grossissement du dispositif photo-électronique de lecture et le corps principal contenant le transducteur d'écriture des informations d'un support magnétique;

— la figure 9: montre un ensemble de trois transducteurs photo-électriques des informations contenues sur un support magnétique dont les signaux sont destinés à être utilisés par un dispositif d'asservissement en position d'un dispositif photo-électronique de lecture permettant à celui-ci de rester parfaitement centré en regard d'une piste déterminée du support magnétique;

— la figure 10: représente un ensemble de trois transducteurs photo-électroniques de lecture des informations contenues sur des supports magnétiques, tels qu'ils sont disposés sur le plan P;

— les figures 11 et 12: illustrent le procédé de montage sur la plan P des transducteurs photo-électriques du dispositif selon l'invention.

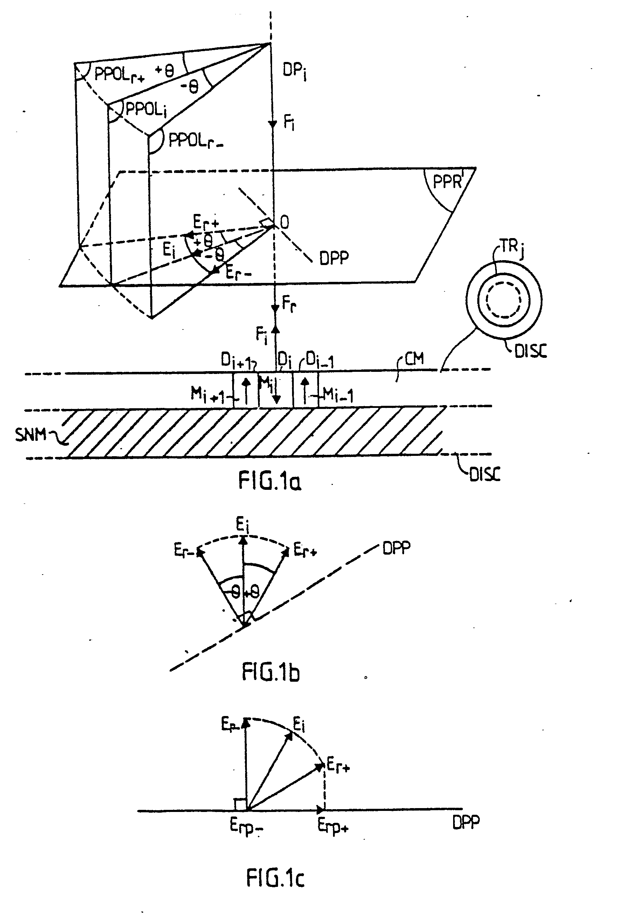

On considère les figures 1a, 1c et 1c qui rappelent le principe de la lecture optique d'informations magnétiques enregistrées sur un disque DISC. Ce dernier est composé d'un support SNM sur lequel est disposé une couche magnétique CM. Il comporte une pluralité de pistes concentriques $TR_j$ contenant chacune une pluralité de bits d'informations constituée d'un ensemble de domaines magnétiques élémentaires $D_i$. De préférence, on choisit un mode d'enregistrement des informations tel que l'aimantation dans les domaines élémentaires $D_i$ soient perpendiculaires à la couche. En effet, ce type d'aimantation permet d'obtenir de plus grandes densités longitudinale et radiale d'informations et son mode d'observation par un faisceau de lumière est plus facile que le mode d'observation d'un milieu où l'aimantation est longitudinale. On supposera par la suite que l'on cherche à lire un disque magnétique où l'aimantation est perpendiculaire à la surface de la couche magnétique CM. A la figure la on a représenté trois domaines $D_i$, $D_{i-1}$, $D_{+1}$ et indiqué par $M_{i+1}$, $M_i$, $M_{i-1}$, les vecteurs d'aimantation respectif de chacun de ce docmaines.

On envoie, perpendiculairement à la surface de la couche CM selon une direction de propagation $DP_i$, un faisceau incident $F_i$ de lumière polarisée rectiligne de préférence cohérente. Ce faisceau est per exemple, un faisceau lumineux laser. On considère un plan de propagation PPR normal à la direction de propagation $JP_i$. Le champ électrique du faisceau incident $F_i$ de lumière prolarisée rectiligne est $E_i$ et a la direction indiquée aux figures 1a et 1b, la figure 1a étant une vue dans l'espace du plan PPR, alors que la figure 1b est une projection de ce même plan PPR sur un plan normal à la direction de propagation.

On définit un plan de polarisation de la lumière constituée par le faisceau $F_i$. Ce plan est désigné par $PPOL_i$. Il est défini par la direction de propagation $DP_i$ et le vecteur $E_i$.

Lorsque le faisceau de lumière polarisé rectiligne se réfléchit sur la couche magnétique CM, il devient le faisceau réfléchi $F_R$. Lorsque le faisceau $F_i$ se réfléchit sur un domaine magnétique, d'aimantation négative, tel que le domaine $D_i$ d'aimantation $M_i$ à la figure la, le faisceau réfléchi $F_R$ de lumière polarisée est tel que son champ électrique $E_{r-}$, a tourné d'un angle $(-\theta)$ par rapport au champ électrique $E_i$ di faisceau inci-

dent. Le plan de polarisation du faisceau réfléchi $F_R$ est alors $PPOL_{r-}$, l'angle diode entre ce plan et le plan $PPOL_i$ étant aussi égal à $(-\theta)$.

De même, lorsque le faisceau incident $F_i$ rencontre un domaine magnétique d'aimantation positive, tel que par exemple le domaine $D_{i+1}$ (ou $D_{i-1}$) d'aimantation $M_{i+1}$, le faisceau réfléchi $F_R$ est tel que son champ électrique $_{r+}$ subit une rotation de $(+\theta)$ par rapport au champ électrique $E_i$ du faisceau incident $F_i$. Le plan de polarisation $PPOL_{r+}$ fait alors avec le plan $PPOL_i$ un angle diode égal à $(+\theta)$.

La figure 1b permet de mieux voir les positions relatives des champs électriques $E_i$, $E_{r-}$, $E_{r+}$ des faisceau incidents $F_i$ et $F_R$, selon que $F_i$ rencontre un domaine d'aimantation négative ou positive.

On voit que pour détecter la valeur des informations enregistrées sur le disque DISC, il suffit de déterminer le sens de l'aimantation des domaines $D_i$ ce qui reveient à déterminer si le vecteur champ électrique a tourné d'un angle $(-\theta)$ ou d'un angle $(+\theta)$.

A cet effet, on place sur le chemin de propagation du faisceau réfléchi $F_R$, un élément analseur de lumière. Celui-ci est généralement constitué d'un cristal présentant une direction privilégiée de propagation de la lumière. Soit DPP cette direction qui est représentée en traits interrompus aux figures 1a et 1b et en traits pleins à la figure 1c. On place l'élément analyseur de telle sorte que cette direction privilégiée de propagation DPP soit normale au champ électrique $E_r$.

A la sortie de l'analyseur, on recueille une lumière dont l'intensité lumineuse est proportionnelle au carré du vecteur qui est la projection du champ électrique (soit $E_r-$, soit $E_{r+}$) sur la direction privilégiée de propagation de la lumière de l'analyseur. Ainsi, si le faisceau $F_i$ rencontre un domaine d'aimantation négative, on recueillera à la sortie de l'analyseur une lumière d'intensité lumineuse proportionnelle au vecteur $E_{rp-}$ projection du vecteur $E_{r-}$ sur la direction de propagation DPP. De même, si le faisceau $F_i$ rencontre un domaine d'aimantation négative $(D_{i+1})$, on recueille à la sortie de l'analyseur de lumière, une lumière dont l'intensité lumineuse est proportionnelle à $E_{rp+}$, projection du vecteur $E_{r+}$ sur la direction privilégiée de propagation DPP.

Si l'on place à la sortie de l'analyseur des éléments photosensibles, que l'on appelle encore transducteurs photo-électrique, on recueillera à la sortie de ceux-ci des signaux électriques proportionnels respectivement à $E_{rp-}$ s'il s'agit de domaines magnétiques d'aimantation négative, et proportionnels à $E_{rp+}$ s'il s'agit de domaines magnétiques d'aimantation positive. Dans le premier cas, le signal électrique recueilli à la sortie du transducteur photo-électrique a une tension quasiment nulle, alors que dans les autres cas, cette tension est non nulle et suffisamment important pour être détectée, par exemple par des moyens électroniques à seuil, et ce après amplification.

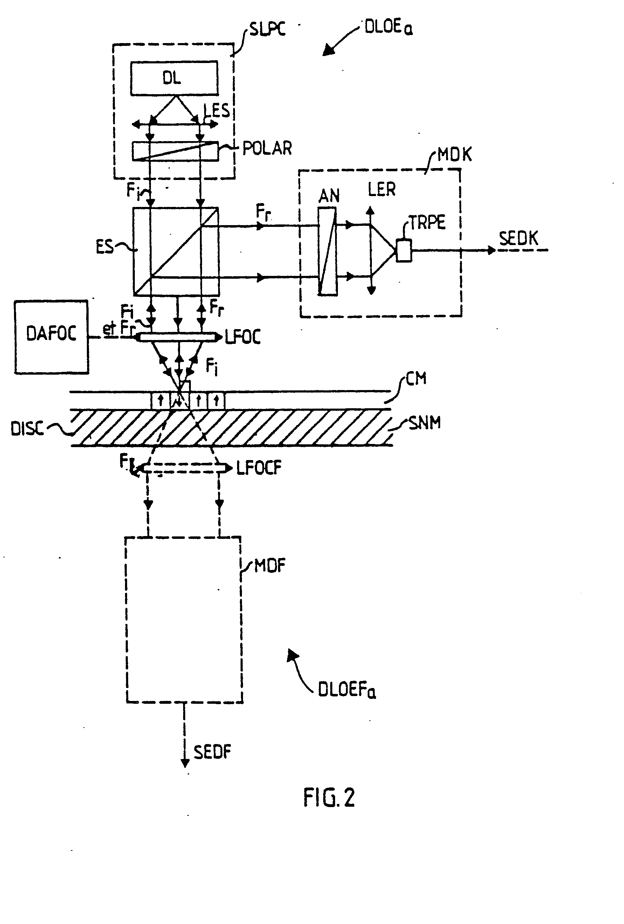

On considère la figure 2, qui représente le schéma de principe d'un dispositif de lecture photo-électronique d'informations magnétiques, tel que celui décrit par IMAMURA dans l'article précité.

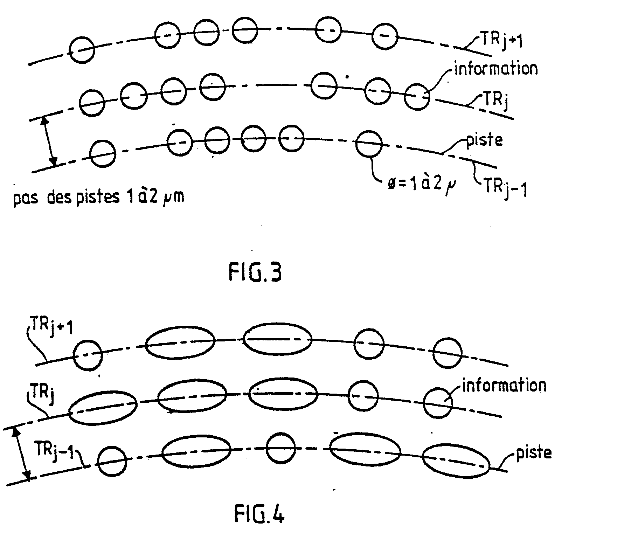

Ce dispositif est destiné à lire des informations contenues sur un disque magnétique DISC comportant une couche magnétique CM à magnétisation perpendiculaire comme il est indiqué à la figure 2. Les informations sont écrites sur les pistes du disque magnétique de la manière indiquée au figures 3 et 4 le pas des pistes (c'est-à-dire la distance entre les axes de symétrie des pistes $TR_i$ et $TR_{i-1}$ par exemple ou $TR_i$ et $TR_{i+1}$) étant de l'ordre de 1 à 2 microns, la dimension de chacun des domaines magnétiques contenus dans chaque piste étant de l'ordre de 1 à 2 microns.

Ces informations sont généralement écrites suivant deux codes différents, illustrés respectivement par les figures 3 et 4. A la figure 3, on a représenté une pluralité de domaines magnétiques appartenant à trois piste $TR_i$, $TR_{i-1}$, $TR_{i+1}$, qui sont circulaires, le code d'écriture étant constitué par un espacement variable entre les informations. A la figure 4 on a représenté ces mêmes pistes $TR_i$ à $TR_{i+1}$, le code d'écriture étant tel que, le pas des informations, (c'est-à-dire la distance qui sépare deux domaines magnétiques voisins d'une même piste) étant constant, il est constitué par une longueur variable des informations.

Que ce soit dans le cas représenté à la figure 3 ou dans celui représenté à la figure 4, les informations sont écrites soit par un moyen thermomagnétique (voir plus haut), soit par des transducteurs magnétiques d'enregistrement.

Le dispositif photo-électronique selon l'art antérieur et désigné par $DLOE_a$.

Ce dispositif comprend:

— une source de lumière polarisée cohérente SLPC qui produit un faisceau de lumière polarisée et cohérente $F_i$ envoyée normalement à la surface de la couche magnétique CM du disque DISC,

— un élément séparateur ES permettant de séparer le faisceau incident du faisceau réfléchi $F_r$,

— une lentille focalisatrice LFOC pour focaliser le faisceau $F_i$ sur la couche CM de telle sorte que le faisceau une dimension de l'ordre de celle des domaines magnétiques, c'est-à-dire de 1 à 2 microns,

— un dispositif d'asservissement de focalisation DAFOC permettant d'asservir la focalisation du faisceau $F_i$ sur la surface de la couche CM quelles que soient les oscillations de cette surface,

— des moyens de détection par "effet Kerr" des bits d'informations enregistrés sur chaque piste de la couche CM du disque DISC.

La source SLPC délivre un faisceau $F_i$ de lumière polarisée cohérente, par exemple un faisceau laser, qui passe successivement à travers l'élément séparateurs ES, la lentille focalisatrice LFOC avant de venir rencontrer la surface de la couche CM, normalement à celle-ci. Ainsi qu'il est indiqué sur la figure 2, la lentille focalisatrice est commandée par le dispositif d'asservissement de focalisation BAFOC, de telle sorte que quelles que soient les variations de distance entre la lentille focalisatrice et la couche CM le faisceau incident $F_i$ soit toujours parfaitement focalisé sur la surface de la couche CM.

Le faisceau incident $F_i$ se réfléchit sur la surface de la couche CM et devient le faisceau réfléchit $F_r$ qui passe successivement à travers la lentille focalisatrice LFOC puis à travers l'élément séparateur ES avant de traverser les moyens de détection par "effet Kerr" MDK. A la sortie des moyens de détection MDK, on recueille un signal SEDK qui délivre un signal de tension nulle lorsque le faisceau incident $F_i$ rencontre un domaine $D_i$ d'aimantation négative et qui délivre un signal non nul lorsque ce même faisceau rencontre un domaine d'aimantation positive.

Ainsi qu'on peut le voir à la figure 2, la source SLPC comporte une diode laser DL, une lentille LES et un polarisateur POLAR. Le rayonnement laser émis par la diode laser est transformé en un faisceau de rayons parallèles à la lentille LES avant de traverser le polariseur POLAR. A la sortie de celui-ci le faisceau produit $F_i$ est un faisceau de lumière polarisée rectiligne.

Les moyens de détection MDK comprennent un analyseur AN une lentille LER et un (ou plusieurs) transducteur photo-électrique TRPE.

L'analyseur reçoit le faisceau de lumière polarisée cohérente réfléchie $F_r$ et fonctionne de la manière indiquée aux figures 1b et 1c.

A la sortie de l'analyseur, le faisceau est envoyé à la lentille LER qui le focalise sur le transducteur photo-électrique TRPE.

Une autre variante du dispositif $DLOE_a$ est représentée en pointillés sur cette même figure 2. On le désigne par $DLOEF_a$.

Son principe consiste à utiliser, au lieu du faisceau réfléchi $F_i$, un faisceau $F_t$ dit faisceau de transmission, qui passe à travers la couche CM et le support non magnétique SNM du disque DISC, en subissant une rotation du plan de polarisation, rotation analogue à celle que subit le faisceau $F_i$ lorsqu'il rencontre la couche CM. Ce phénomène s'appelle l'effet FARADAY. Il est strictement analogue "à l'effet Kerr". Dans ces conditions, le dispositif $DLOEF_a$ comprend une lentille focalisatrice LFOCF suivie de moyens de détection par effet Faraday MDF.

Le fonctionnement de la lentille LFOCE et des moyens de détection MDF est analogue à celui de la lentille FOC et des moyens de détection MBK précédemment décrits. Il est clair que si l'on utilise l'effet Faraday, le dispositif $DLOEF_a$ ne comprend pas d'élément séparateur ES comme c'est le cas pour le dispositif $DLOE_a$. De préférence, la lentille LFOCF peut être commandée par un dispositif d'asservissement de focalisation.

Il est rappelé que les inconvénients des dispositifs $DLOE_a$ et $DLOEF_a$ sont les suivants

— du fait que le faisceau incident $F_i$ est concentré sur la couche CM de telle sorte que ses dimensions soient de l'ordre de celles des domaines magnétiques, à savoir 1 à 2 microns, les dispositifs selon l'art antérieur nécessitent d'être positionnés en regard d'une piste déterminée avec une rès grande précision d'une part, et d'autre part, le dispositif de focalisation DAFOC doit être, également extrêmement precis.

On montre en outre que le rapport signal/bruit, c'est-à-dire le rapport entre le signal SEDK (SEDF) et le bruit que l'on recueille à la sortie du transducteur TRPE est relativement faible.

En outre les dispositifs selon l'art antérieur sont extrêmement volumineux et coûteux.

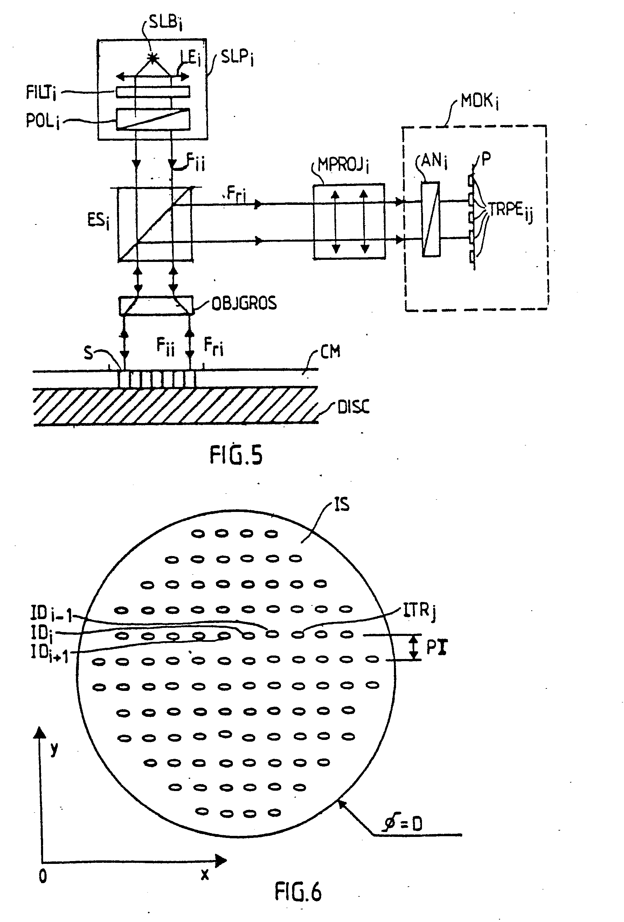

Le dispositif de lecture opto-électronique selon l'invention, dont le schéma de principe est représenté à la figure 5 permet de remédier aux inconvénients mentionnés ci-dessus.

On suppose que l'on cherche à lire les informations magnétiques d'un disque DISC comportant une couche magnétique CM les informations étant inscrites à l'intérieur d'une pluralité de pistes concentriques circulaires, de la manière indiquée aux figures 3 et 4.

Le dispositif opto-electronique selon l'invention fonctionne suivant les principes de lecture qui ont été exposés plus haut, à l'occasion de la description de la figure 1, à savroix, employer un faisceau de lumière polarisée incident normalement à la surface du disque et détecter la rotation du plan de polarisation de la lumière du faisceau réfléchi.

Les différents éléments constitutifs essentiels du dispositif de lecture opto-électronique selon l'invention, sont les suivants:

— une source de lumière polarisée $SLP_i$,
— un élément séparateurs $ES_i$ du faisceau incident et du faisceau réfléchi,
— une optique de grossissement OBJGROS permettant d'éclairer la couche magnétique CM du disque DISC sur une surface de diamètre $\phi$, tel qu'on observe simultanément plusieurs pistes (au moins une dizaine) et une pluralié de domaines magnétiques à l'intérieur de chaque piste,
— des moyens de projection $MPROJ_i$,
— un analyseur de lumière $AN_i$,
— un plan de projection P où est projetée l'image de la surface du dispositif éclairé par le faisceau incident, image obtenue par les moyens de projection $MPROJ_i$ l'analyseur $AN_i$ étant disposé entre les moyens de projection et le plan P,
— un ensemble de transducteurs photo-électriques $TRPE_{ij}$ délivrant un ensemble de signaux électriques correspondant aux différents domaines magnétiques du disque DISC observé à l'intérieur de la surface éclairée par le faisceau de lumière incident.

La source de lumière polarisée $SLP_i$ emet un faisceau de lumière parallèle incident $F_{ii}$. Cette lumière est relativement mono chromatique. Elle peut être ou non cohérente.

Le faisceau indicent $F_{ii}$ passe à travers l'élément séparateur $ES_i$ et est envoyé à travers l'optique de grossissement OBJGROS normalement à la surface de la couche magnétique CM du disque DISC. La surface ainsi éclairée est désignée par S et est sensiblement circulaire. Si le grandissement G de l'optique OBJGROS est compris entre 10 et 500 (voir nulle) par exemple, on peut observer une surface d'un diamètre φ compris entre 10 microns et 500 microns environ. On peut ainsi observer quelques dizaines, voir une certaine de pistes, et quelques dizaines voir quelques centaines de domaines magnétiques à l'intérieur de chaque piste.

On voit ainsi que contrairement aux dispositifs de lectures opto-électroniques selon l'art antérieur, on ne focalise plus le faisceau lumineux sur un seul domaine magnétique, ce qui avait l'inconvénient de nécessiter un faisceau lumineux de très petit diamètre.

La faisceau réfléchi $F_{ri}$ passe à travers successivement l'optique OBJGROS puis l'élément séparateur $ES_i$ avant de traverser les moyens de projection $MPROJ_i$. La lumière du faisceau réfléchi $F_{ri}$ passe ensuitre à travers l'analysateur de lumière polarisée $AN_i$ avant d'être projeté sur le plan P où sont disposés les transducteurs photo-électriques $TRPE_{ij}$.

On obtient donc sur le plan P une image de surface S vue au travers de l'optique OPJGROS, de l'élément séparateur $ES_i$ et des moyens de projection $MPROJ_i$. Soit IS cette image de la surface S. Cells-ci est donc une image réelle du champ des informations lues à l'intérieur de la surface S observées par l'optique OBJGROS. Cette image au travers de l'ensemble optique constitué par l'optique OBJGROS et les moyens de projection $MPROJ_i$ peut être obtenue avec un grandissement g compris par exemple entre 100 et 1000. Ainsi si l'on suppose que les informations ont un diamètre de 1 micron, et si l'agrandissement g est de l'ordre de 500, on observe alors sur P des taches correspondant à ces informations, de 500 microns. Ces taches apparaissent par exemple en clair si elles correspondent à des domaines magnétiques d'aimantation positive, et en noir si elles correspondant à des domaines d'aimantation négative.

La dimension de cest taches est donc parfaitement compatible avec les dimensions des transducteurs photo-électriques que l'on trouve dans la pratique courante. On peut donc disposer sur le plan P selon un direction OY correspondant à un rayon du disque, une pluralité de transducteurs photo-électriques (encore appelés cellules photosensibles et que sont généralement des photo diodes semi conductrices) et dont le pas PI soit égal au pas de l'image $ITR_i$ des pistes vues à l'intérieur de la surface IS (voir figure 6). Il est donc alors possible de lire simultanément plusieurs pistes. En outre, si l'on dispose sur le plan P, une barrette de photo diodes selon l'axe OX perpendiculaire à l'axe OY, c'est-à-dire selon une direction correspondante à la tangeute aux pistes du disque, il est possible de relire plusieurs fois la même information. On voit qu'on peut disposer ainsi sur le plan P une matrice de photo diodes dont le pas suivant l'axe OY est egal au pas PI et dont le pas suivant l'axe OX correspond à la distance entre les images $ID_i$ des domaines magnétiques de chacune des pistes. Ce pas est égal à la distance par exemple entre les deux images $ID_i$ et $ID_{i+1}$ représentées à la figure 6. On voit ainsi qu'on peut relire plusieurs fois la même information. De ce fait, si l'on dispose à la sortie de la matrice de l'ensemble des transducteurs $TRPE_{ij}$ un circuit logique électronique utilisant la redondance des informations, c'est-à-dire le fait qu'une information est lue plusieurs fois, on diminuera très sensiblement le rapport signal/bruit par rapport au rapport signal/bruit qui serait obtenu s'il n'y avait qu'un sel transducteur. En effet, si à la sortie d'un seul transducteur on recueille un signal d'amplitude S, et un bruit B, et si on lit n fois la même information, et si l'on somme l'ensemble des signaux correspondants, on obtient à la sortie de l'additionneur un signal S, et le bruit restant alors égal à B. Le rapport signal/bruit devient donc n S/B alors qu'il était égal à s/B.

Les différents éléments constitutifs de la source de lumière polarisée $SLP_i$ sont par exemple, une source de lumière blanche $SLB_i$, une lentille $LE_i$ qui forme un faisceau de lumière parallèle qui passe à travers le filtre $FILT_i$ avant de traverser un polariseur $POL_i$.

Les moyens de projection $MPROJ_i$ sont composés par exemple d'un ensemble de lentilles.

Etant donné que le nombre de pistes observé par le dispositif de lecture opto-électronique selon l'invention est de l'ordre de quelques dizaines à une centaine d'une part et que d'autre part le nombre total de piste d'un disque magnétique est de l'ordre de plusieurs milliers, il est clair qu'il est nécessaire de déplacer le dispositif de lecture opto-électronique), parallèlement à un diamètre du disque et ce, pour en observer toutes les pistes. Ce dispositif de lecture doit donct être au moins partiellement, placé sur un dispositif de déplacement lui permettant d'observer l'ensemble des pistes du disque.

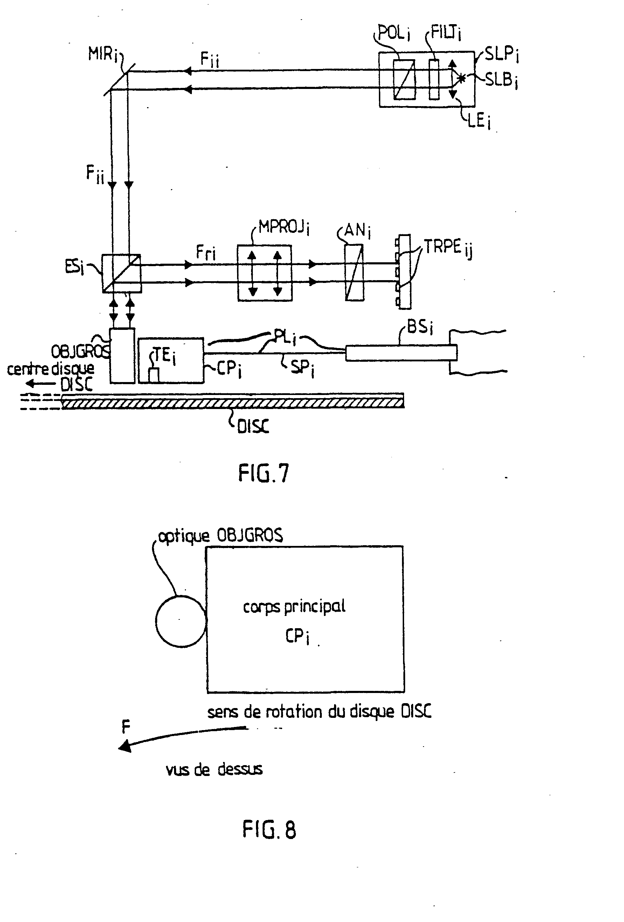

La figure 7 montre une dispositif de lecture opto-électronique selon l'invention dont une partie est disposée sur une plate-forme permettant à ce dispositif de pouvoir lire l'ensemble des pistes du disque. Cette plate-forme peut être de type classique analgoue à celles qui sont fabriquèes par exemple par la société "Applied Magnetic Corporation" (A.M.C.), sous la référence Winchester 3304 et 3306. Une telle plate-forme comprend par exemple un bras support $BS_i$ fixé par l'une de ses extrémités par exemple à un chariot mobile extérieur au disque DISC (chariot non représenté pour simplifier à la figure 7) et dont l'autre extrémité est solidaire d'un ressort de suspension $SP_i$, lequel porte un corps principal $CP_i$. Ce corps principal contient par exemple un transducteur électro-magnétique d'écrituee des informations du disque magnétique. Ce transducteur est désigné par $TE_i$.

La plate-forme $PL_i$ est de type mobile, c'est-à-dire qu'on la déplace radialement au-dessus de la face du disque DISC à la quelle elles est associée, afin de permettre au transducteur d'écriture (et également au dispositif opto-électronique selon l'invention) d'accéder à toute information contenue sur celle-ci.

Généralement le corps principal $CP_i$ a la forme d'un parallélépipède rectangle relativement plat dont une première "grande face" disposée en regard de la face du disque contient l'entrefer du transducteur d'écriture $TE_i$, la seconde "grande face" contenant les extrémités des conducteurs d'entrée et/ou de sortie de ce transducteur.

Au cours de la rotation du disque magnétique DISC, il se forme entre celui-ci et la première grande face du corps principal $CP_i$ un coussin d'air comprimé qui empêche le corps de le toucher et par suite de le détériorer. On dit alors que le corps principal vole au-dessus du disque. Dans ces conditions, la distance entre l'entrefer du transducteur $TE_i$ et la face du disque est de l'ordre de quelques dixièmes de microns.

Les différents éléments constituant le dispositif de lecture opto-électronique représenté à la figure 7 sont identiques à ceux représentés à la figure 6, à savoir, l'optique OBJGROS, l'élément séparateur $ES_i$, les moyens de projection $MPROJ_i$ l'analyseur $AN_i$, le plan P l'ensemble de transducteurs photo-électriques $TRPE_{ij}$, la source de lumière polarisée $SMP_i$.

De préférence, tous les éléments de ce dispositif selon l'invention à l'exception de la source de lumière polarisée $SLP_i$ sont montés sur la plate-forme $PL_i$.

Dans ces conditions, la source $SLP_i$ est disposée à l'extérieur du disque et est fixe. Il est alors nécessaire de placer sur la plate-forme $PL_i$ un miroir $MIR_i$ qui reçoit le faisceau $F_{ii}$ envoyé par la source $SLP_i$ pour l'envoyer ensuite à l'optique OBJGROS, par l'intermédiaire de l'élément séparateur $ES_i$.

Il est clair que tous ces éléments doivent être disposés avec une très grande précision sur la plate-forme.

La figure 8 est une vue de dessus du corps principal $CP_i$ et de l'optique OBJGROS qui de façon plus précise montre la disposition de ces deux éléments. On a représenté sur cette même figure le sens de rotation du disque qui défile selon la direction indiquée par la flèche F. On voit ainsi que le corps principal $CPL_i$ (et dont le transducteur écriture $TE_i$) voit dans le temps défiler les informations de chaque piste du disque avant l'optique OBJGROS.

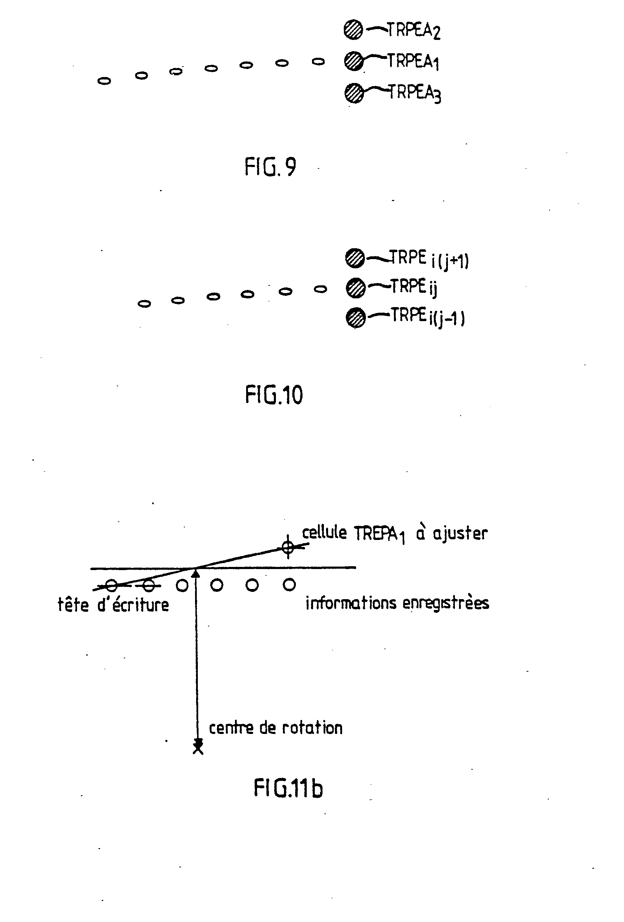

Ainsi qu'on peut le voir à la figure 9, le dispositif opto-électroniques selon l'invention peut comporter, de préférence, un ensemble de trois diodes $TRPEA_1$, $TRPEA_2$, $TRPEA_3$, dont les signaux de sortie sont envoyés à un dispositif permettant d'asservir en position le transducteur d'écriture $TE_i$, aussi bien que le dispositif photo-électronique de lecture dans son ensemble, de façon à maintenir, soit le premier, soit le second dans une position parfaitement déterminée en regard soit d'une piste $TR_j$ pour le premier, soit au-dessus d'un ensemble de pistes, dont la piste $TR_j$ est la piste centrale, pour le second. La distance entre les deux photo-diodes $TRPEA_1$, $TRPEA_2$ d'une part, $TRPEA_1$ et $TRPEA_3$ d'autre part, est égale à PI/2, soit la moitié du pas qui sépare les images de deux pistes voisines (se référen à la figure 6).

Ainsi on dira que le dispositif de lecture opto-électronique (ou que le transducteur d'écriture) est correctement positionné en regard du disque DISC lorsque le signal moyen délivré par le transducteur $TRPEA_1$ est maximum, les deux transducteurs (photo diodes) $TRPEA_2$ et $TRPEA_2$ fournissant un signal le plus voisin possible de zéro. On choisit le signal moyen puisque, lorsque le transducteur $TRPEA_1$ voit défiler devant lui tous les domaines magnétiques de la piste $TR_j$, le signal délivré est nul pour un domaine magnétique d'aimantation négative et est non nul pour un domaine magnétiques d'aimantation positive.

On montre que l'on peut encore améliorer le fonctionnement du dispositif d'asservissement de position du dispositif selon l'invention en utilisant les informations délivrées par exemple par trois transducteurs photo-électriques voisins tels que les transducteurs $TRPE_{ij}$, $TRPE_{i(j+1)}$ $TRPE_{i(j-1)}$ représentés à la figure 10, transducteurs qui sont disposés selon une direction parallèle à l'axe OY (se référen également à la figure 6).

On voit donc que l'on peut placer sur le plan P aussi bien la matrice de photo diode $TRPE_{ij}$ que les trois photo-diodes d'asservissement de position $TRPEA_1$ à $TRPEA_3$.

On montre qu'il est nécessaire que le montage des différents éléments constituant le dispositif opto-électronique selon l'invention soit effectué avec le plus grande précision possible, de l'ordre du micron.

Le montage de l'objectif OBJGROS par rapport au corps principal $CP_i$, et le positionnement des différentes photo-diodes du plan P par rapport à l'objectif et au corps principal s'effectue selon les principes suivants:

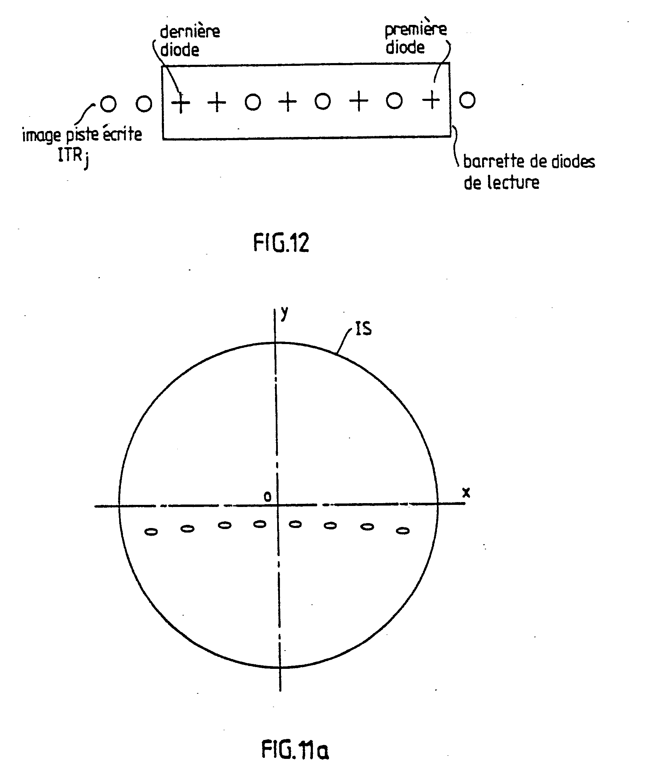

Le corps principal a des dimensions très grandes par rapport à celles de l'information. Ainsi, ses dimensions sont de l'ordre de 2 millimètres en hauteur, trois millimètres en largeur et 4 millimètres en longueur. De ce fait, selon la précision du montage de l'objectif par rapport au corps principal, et par suite par rapport au transducteur d'écriture, l'information écrite d'une piste déterminée peut occuper différentes positions selon OY dans le champ d'observation de l'objectif et par suite à l'intérieur de l'image IS de la surface S (voir figure 11a où l'on a représenté des informations écrites par la tête d'ecriture décalées par rapport à l'axe OX).

Pour placer les trois transducteurs d'asservissement $TRPEA_1$ à $TRPEA_3$ sur le plan P, on procède ainsi:

— supposons la surface de la couche CM du disque DISC non enregistrée. Dès que l'objectif OBJGROS est fixé sur le corps principal, on écrit au moyen du transducteur d'écriture $TE_i$, les informations d'une seule piste. Il apparaît donc sur le plan P l'image de cette piste (voir également figure 11a). Ainsi qu'on peut le voir sur cette même figure il est nécessaire que la piste écrite apparaisse dans le champ de vision de l'objectif, c'est-à-dire à l'intérieur de l'image IS, mais il n'est pas nécessaire qu'elle soit parfaitement centrée par rapport à cet objectif. En effet, on ajuste suivant l'image de cette piste un substrat de silicium comportant les trois photo diodes d'asservissement $TRPEA_1$ à $TRPEA_3$ ainsi que la matrice de photo diodes de lecture d'information $TRPE_{ij}$.

Il est clair que l'élément $TRPEA_1$ sera placé sur la substrat en silicium de telle sorte que il coïncide avec la piste qui vient d'être écrite, les deux autres éléments qui l'entourent à savoir $TRPEA_2$ et $TRPEA_3$ étant placés à une distance égale à PI/2 (voir plus haut). L'ajustement des trois éléments photo diodes d'asservissement par rapport au transducteur d'écriture $TE_i$ est relativement aisé puisque le grandissement de l'optique et des moyens de projection donnent une image de la piste et des informations enregistrées sur celle-ci telle que la piste ait une largeur d'un demi millimètre (l'image des domaines magnétiques ayant également la largeur de cette ordre de grandeur). Ainsi la figure 11b montre que les informations de la piste enregistrée, dont l'image est $ITR_j$ ne sont pas alignées avec la photo diode $TRPEA_1$. Cet alignement s'effectue très simplement en décalant l'ensemble des photo-diodes d'asservissement.

Dès que cet ajustement est fini, il faut de même ajuster l'ensemble de photo-diodes de lecture. Pour cela il suffit de disposer d'un certain nombre de barrettes de diodes (qu sont livrées ainsi dans le commerce). Si on suppose que les photo diodes d'une barrette sont alignées sur un même substrat de silicium, alors il suffit d'aligner la première et la dernière diode, sur l'image de la piste écrite $TR_j$. Il et évident qu'on peut répéter l'opération pour plusieurs barrettes de diodes, de façon à constituer une matrice de photo-diodes.

Il est évident que l'ensemble des barrettes de photo-diodes (celle d'asservissement et celles de lecture) peuvent être réalisées de préférence sur un même substrat de silicium.

On voit ainsi que le plan P est matérialisé par le substrat de silicium.

**Revendications**

1. Dispositif de lecture optoélectronique d'informations contenues sur un support magnétiques (DISC) à l'intérieur d'une pluralité de pistes (TRj), comprenant

— une source (SLPi) émettant un faisceau de lumière polarisée (Fi) sur la surface du support en un endroit déterminé de celui-ci dont l'interaction avec l'état magnétique du support en cet endroit produit une rotation du plan de polarisation de la lumière,

— des moyens optiques permettant d'éclairer simultanément une zone comprenant une pluralité de pistes et une pluralité d'informations sur chaque piste,

— des moyens (MPROJi) de projection de l'image de la surface du support éclairée par lesdits moyens optiques, sur un plan (P) où sont disposés des transducteurs photo-électroniques (TRPEij),

— des moyens (MDK) de détection de l'angle de rotation du plan de polarisation de la lumière comprenant un analyseur de lumière (ANi) et des transducteurs photoélectriques (TRPEij) délivrant un signal électrique dont la tension/ ou courant est fonction de la valeur de l'information située à cet endroit, caractérisé en ce que les moyens optiques sont représentés par un objectif (OBJGROS) permettant d'émettre un seul faisceau de lumière incident (Fi) sur ladite zone du support de largeur déterminée, de récupérer le faisceau de lumière réfléchi (Fri) avant de le transmettre aux moyens de projection (MPROJi) et d'agrandir l'image des domaines magnétiques observés.

2. Dispositif de lecture selon la revendication 1, caractérisé en ce que le grandissement de l'objectif (OBJGROS) est compris entre 10 et 500, l'ensemble optique constitué par l'objectif (OBJGROS) et les moyens de projection (MPROJi) ayant un grandissement compris entre 100 et 1000.

3. Dispositif selon l'une des revendications 1 ou 2 caractérisé en ce que les transducteurs photoélectroniques disposés sur le plan (P) forment une matrice comprenant une pluralité de lignes et de colonnes, les colonnes étant disposées suivant un axe OY correspondant à un rayon du disque, les lignes de transducteurs étant parallèles à un axe Ox perpendiculaire à OY, le pas entre les transducteurs (TRPEij) alignés suivant une direction parallèle à OY étant égal au pas de l'image des pistes alors que le pas entre les transducteurs alignés selon les lignes parallèles à OX est égal au pas des images des domaines magnétiques.

4. Dispositif selon l'une quelconque des revendications 1 à 3 caractérisé en ce que les moyens de détection (MDK) de l'angle de rotation, l'objectif (OBJGROS) et les moyens (MPROJi) de l'image, le plan (P) et ses transducteurs optoélectroniques (TREPij) sont disposés sur un plate-forme (PLi) pouvant se déplacer par rapport aux pistes du support, plate-forme qui comprend, un bras support (BSi) solidaire d'un ressort (SPi) de suspension qui porte un corps principal (CPi) contenant un transducteur (TEi) d'écriture des informations du support, le corps principal voyant, dans le temps, défiler les informations de chaque piste du disque avant l'objectif (OBJGROS).

5. Dispositif selon l'une des revendications 1, 2, 3 ou 4 caractérisé en ce qu'il comprend trois transducteurs photo-sensibles (TRPEA1, 2, 3) alignés selon une direction parallèle à l'axe OY, la distance entre deux transducteurs voisins étant égale à la moietié du pas qui sépare les images de deux pistes voisines, les signaux de sortie de ces transducteurs étant envoyés à un dispositif permettant d'asservir en position le dispositif de lecture optoélectronique des informations du support, par rapport à un ensemble de pistes (TRj) déterminé de celui-ci.

**Patentansprüche**

1. Optoelektronische Lesevorrichtung für die Informationen, die auf einem magnetischen, magnetischen Träger (DISC) im Inneren mehrerer Spuren (TRj) enthalten sind, mit

— einer Quelle (SLPi), die ein Bündel polarisierten Lichts (Fi) auf die Oberfläche des Trägers and einer bestimmten Stelle desselben aussendet, dessen Wechselwirkung mit dem magnetischen Zustand des Trägers an dieser Stelle eine Drehung der Polarisationsebene des Lichtes bewirkt,
— optischen Mitteln zum gleichzeitigen Beleuchten einer Zone, die mehrere Spuren umfasst, und mehrerer Informationen in jeder Spur,
— Mitteln (MPROJi) zur Projektion der Bildes der durch die genannten optischen Mittel beleuchteten Oberfläche des Trägers auf eine Ebene (P), worin photoelektronische Wandler (TRPEij) angeordnet sind,
— Mitteln (MDK) zur Erfassung des Drehwinkels der Polarisationsebene des Lichtes, die einen Lichtanalysator (ANi) sowie photoelektrische Wandler (TRPEij) umfassen, welche ein elektrisches Signal abgeben, dessen Spannung bzw. Strom vom Wert der an dieser Stelle liegenden Information abhängt, dadurch gekennzeichnet, dass die optischen Mittel durch ein Objectiv (OBJGROS) dargestellt werden, durch welches ein einziges ankommendes Lichtbündel (Fi) auf die genannte Zone des Trägers von bestimmter Breite ausgesendet werden kann, das reflektierte Lichtbündel (Fri) vieder aufgenommen werden kann, bevor es zu den Projektionsmitteln (MPROJi) übertragen wird, und die Abbildung der beobachteten magnetischen Gebiete vergrössert werden kann.

2. Lesevorrichtung nach Anspruch 1, dadurch gekennzeichnet, dass die Vergrösserung des Objektives (OBJGROS) zwischen 10 und 500 beträgt, wobei die optische Gruppe, welche durch das Objectiv (OBJGROS) und die Projektionsmittel (MPROJi) gebildet ist, eine Vergrösserung aufweist, die zwischen 100 und 1000 liegt.

3. Vorrichtung nach Anspruch 1 oder 2, dadurch gekennzeichnet, dass die photoelektronischen Wandler, welche in der Ebene (P) angeordnet sind, eine Matrix bilden, die mehrere Zeilen und Spalten umfasst, wobei die Spalten entlang einer Achse OY angeordnet sind, welche einem Plattenradius entspricht, während die Wandlerzeilen parallel zu einer Achse OX sind, die senkrecht zu OY ist, wobei ferner der Teilungsabstand zwizchen den Wandlern (TRPEij), die entlang einer Richtung parallel zu OY ausgerichtet sind, gleich dem Abstandsschritt der Abbildung der Spuren ist, während der Abstrandsschritt zwischen den Wandlern, die entlang zu OX parallelen Linien ausgerichtet sind, gleich dem Abstandsschritt der Abbildungen der magnetischen Gebiete ist.

4. Vorrichtung nach einem der Ansprüche 1 bis 3, dadurch gekennzeichnet, dass die Erfassungsmittel (MDK) für den Drehwinkel, das Objektiv (OBJGROS) und die Abbildungsmittel (MPROJi) sowie die Ebene (P) und ihre optoelektronischen Wandler (TREPij) auf einer Plattform (PLi) angeordnet sind, welche bezüglich den Spuren des Trägers Bewegbar ist und einen Tragarm (BSi) umfasst, der fest mit einer Aufhängungsfeder (SPi) verbunden ist, welche einen Hauptkörper (CPi) trägt, der einen Wandler (Eli) zum Aufzeichnen der Informationen des Trägers enthält, wobei dieser Hauptträger die Informationen jeder Spur der Platte im Verlauf der Zeit vor dem Objektiv (OBJGROS) vorbeilaufen sieht.

5. Vorrichtung nach einem der Ansprüche 1, 2, 3 und 4, dadurch gekennzeichnet, dass sie drei photoemefindliche Wandler (TRPEA1, 2, 3) umfasst, welche in einer Richtung parallel zur Achse OY ausgerichtet sind, wobei der Abstand zwischen zwei benachbarten Wandlern gleich der Hälfte des Teilungsschrittes ist, der die Abbildungen von zwei benachbarten Spuren voneinander trennt, wobei die Ausgangssignale dieser Wandler zu einer Vorrichtung gesendet werden, die es ermöglicht, eine Stellungsnachführung der optoelektronischen Vorrichtung zum Auslesen der Informationen des Trägers bezüglich einer bestimmten Gruppe von Spuren (TRj) desselben durchzuführen.

**Claims**

1. Device for optoelectronic reading of data contained on a magnetic carrier (DISC) within a plurality of tracks (TRj) comprising:

— a source (SLPi) emitting a beam of polarised light (Fi) on to the surface of the carrier at a particular location of the same of which the interaction with the magnetic state of the carrier at this location produces a rotation of the plane of polarisation of the light,
— optical means permitting simultaneous illumination of a zone comprising a plurality of tracks and a plurality of data on each track,
— means (MPROJi) for projecting the image of the surface of the carrier illuminated by the said optical means, on to a plane (P) in which are situated photoelectronic transducers (TRPEij),
— means (MDK) for detecting the angle of rotation of the plane of polarisation of the light comprising a light analyser (ANi) and photoelectric transducers (TRPEij) supplying an electric signal of which the voltage/or current is a function of the value of the information present at this point, characterised in that the optical means are represented by an objective (OBJGROS) permitting the emission of a single beam of incident light (Fi) on the said zone of the carrier of a particular width, recovering the beam (Fri) of reflected light before transmitting the same to the projection means (MPROJi) and enlarging the image of the magnetic areas observed.

2. Reading device according to claim 1, characterised in that the magnification of the objective (OBJGROS) is comprised between 10 and 500 and the projection means (MPROJi) have a magnification comprised between 100 and 1000.

3. Device according to one of claims 1 or 2, characterised in that the photoelectronic transducers situated in the plane (P) form a matrix comprising a plurality of lines and columns, the columns being arranged along an axis OY corresponding to a radius of the disc, the lines of transducers being parallel to an axis OX perpendicular to OY, the spacing between the transducers (TRPEij) aligned along a direction parallel to OY being equal to the spacing of the image of the tracks whereas the spacing between the transducers aligned along the lines parallel to OX is equal to the spacing of the images of the magnetic areas.

4. Device according to any one of claims 1 to 3, characterised in that the means (MDK) for detecting the angle of rotation, the objective (OBJGROS) and the means (MPROJi) for projection of the image, the plane (P) and its optoelectronic transducers (TREPij) are situated on a platform (PLi) displaceable with respect to the tracks of the carrier, this platform comprising a support arm (BSi) attached to a suspension spring (SPi) which carries a main element (CPi) containing a transducer (TEi) for writing the data of the carrier, the main element seeing, in time, the passing of the data of each track of the disc before the objective (OBJGROS).

5. Device according to one of claims 1, 2, 3 or 4, characterised in that it comprises three photosensitive transducers (TRPEA1, 2, 3) aligned along a direction parallel to the OY axis, the distance between two adjacent transducers being equal to half the spacing which separates the images of two adjacent tracks, the output signals of these transducers being transmitted to a device permitting the positional control of the device for optoelectronic reading of the carrier date, with respect to a particular set of tracks (TRj) of the same.

FIG.1a

FIG.1b

FIG.1c

0 077 693

FIG.2

2

pas des pistes 1 à 2 μm

ø = 1 à 2 μ

FIG.3

FIG.4

3

0 077 693

FIG.5

FIG.6

FIG.7

optique OBJGROS

corps principal
CPi

sens de rotation du disque DISC

F

vus de dessus

FIG. 8

5

FIG.9

FIG.10

FIG.11b

dernière
diode

première
diode

image piste écrite
ITR$_j$

barrette de diodes
de lecture

FIG.12

y

IS

o                x

FIG.11a